# EUROPEAN PATENT APPLICATION

(11) **EP 2 400 622 A2**
(43) Date of publication of application: **28.12.2011**
(21) Application number: 10189210.7
(22) Date of filing: 28.10.2010
(51) Int. Cl.: H02J 7/00, H01M 10/42, H01M 16/00

(54) **Inductive cell balancing**

(30) Priority: 28.06.2010 EP 10167520
(71) Applicant: NXP B.V., 5656 AG Eindhoven (NL)
(72) Inventor: Van Lammeren, Johannes Petrus Maria, 5656 AE, Eindhoven (NL)
(74) Representative: Schouten, Marcus Maria

(57) **Abstract**

An energy storage cell arrangement has a shared inductor (60). A switching arrangement (62) is controllable such that it is able to couple one side of the inductor to any one of a first set of cell terminals, and to couple the other side of the inductor to any one of a second set of cell terminals, wherein the first and second sets of cell terminals together comprise all cell terminals of the series arrangement. In this way, energy can be transferred between cells in a configurable way, using a shared inductor.

## Description

This invention relates to inductive cell balancing, in multiple-cell power supply applications. The cells can be battery cells or capacitor (super capacitor) cells. One example of particular interest is the cells used in electric vehicle battery packs.

In (hybrid) electric vehicles, large numbers of series-connected batteries are used to generate a high voltage to drive the motor. For optimum life time of the battery cells (and drive range of the car), the State of Charge (SoC) of all battery cells should always be the same. When the cells in a series-connected string are charged they all receive the same current, so in principle they should be at the same SoC after charging. There are, however, always mismatches between battery cells, e.g. leakage current and efficiency of converting current into chemically stored energy. Therefore the SoCs of the battery cells will not be the same after charging. If nothing is done, the differences will grow with each charge/discharge cycle.

To keep the SoC of all battery cells as equal as possible cell-balancing circuits are usually added to the high-voltage battery pack of (hybrid) electric cars.

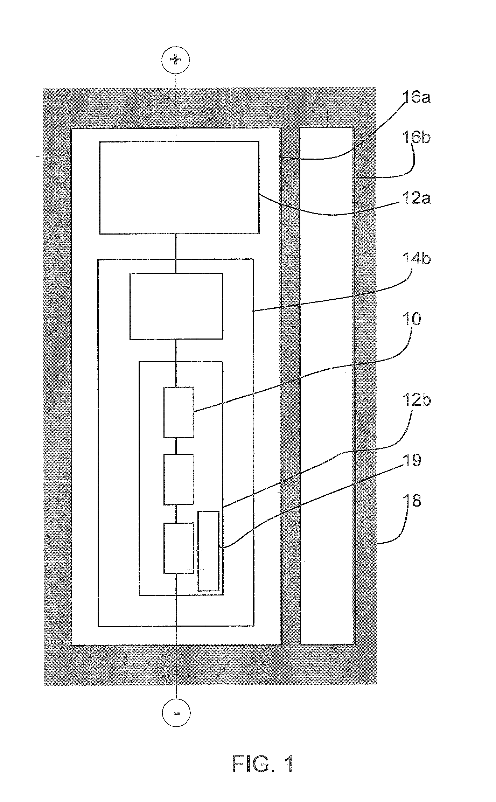

In this application, the following words are used to describe the various parts of a high-voltage battery pack. Figure 1 shows a simplified block diagram of a battery pack with components as defined below:
- the "cell" 10 or "battery cell" 10 is the basic component. The voltage is typically 2.5-4.2V, dependent on chemistry and SoC;
- a "section" 12 is a group of cells 10 that share a number of electronic cell-balancing components. Two sections 12a, 12b are shown - only section 12b shows the constituent cells 10. The voltage is typically 5-17V, depending on the number of cells 10 in the section12, the cell chemistry and SoC;
- a "module" 14 is a group of sections 12. Two modules 14a, 14b are shown - only module 14b shows the constituent sections 12a, 12b. The voltage is usually chosen to be a "safe voltage", i.e. up to 60V;
- a "slice" 16 is a group of series-connected modules that generate the same voltage as the total battery pack. Two slices 16a,16b are shown - only slice 16a shows the constituent modules 14a,14b. The voltage depends on the application somewhere in the range of 100V to 600V.

A "pack" or "battery pack" 18 is a group of parallel-connected slices 16 that make up the total battery as used in the application. The parallel connection increases the energy content and power capabilities of the battery pack, but not its voltage. In many applications the battery pack 18 consists of just one single slice 16. Depending on the application, the voltage is somewhere in the range of 100V to 600V (same as the slice voltage).

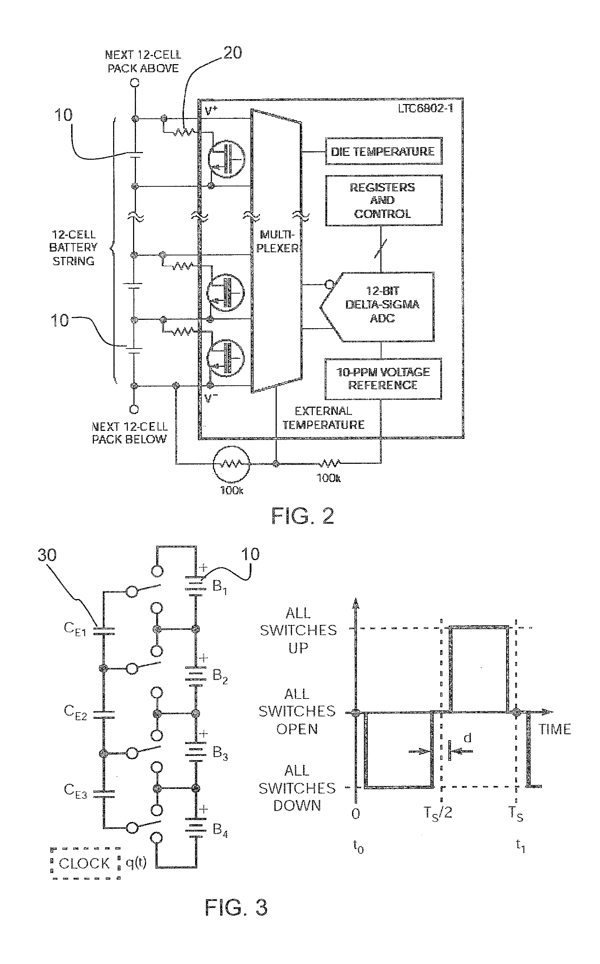

Figures 2 to 4 show three different approaches to cell-balancing that are in use today.

Figure 2 shows a passive cell-balancer. In this approach, the cell 10 with the highest charge is simply (partly) discharged by switching a resistor 20 across it. As this is not energy-efficient this approach is mainly used in hybrid electric vehicles, as the engine can supply enough energy to the battery pack to keep the driving range at an acceptable level.

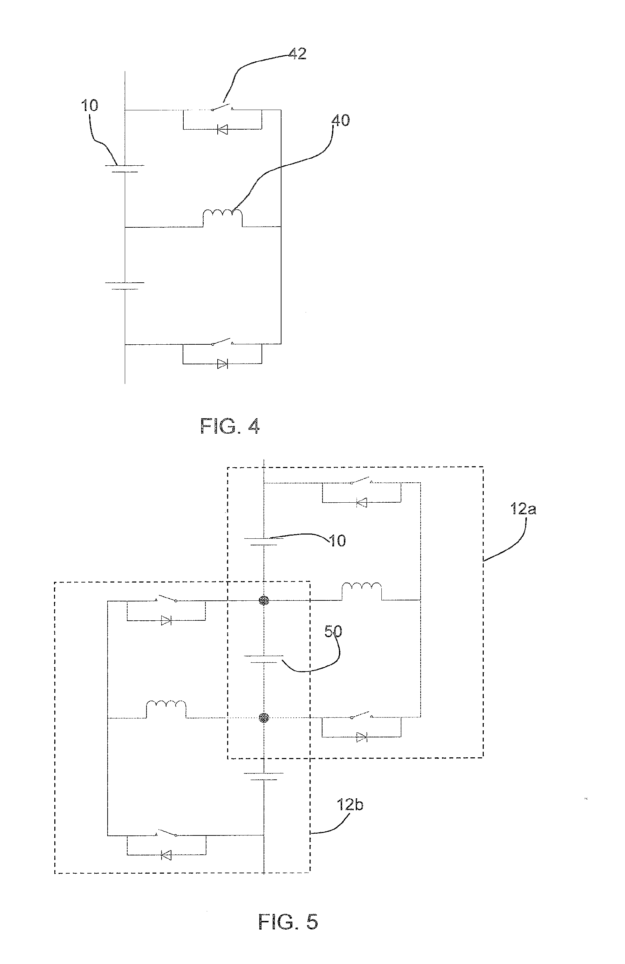

For electric vehicles without internal combustion engine, the approaches of Figure 3 and Figure 4 are more interesting.

Figure 3 shows a capacitive system. Charge is moved between two adjacent cells 10 by a capacitor 30. If all capacitors move between their cells often enough, the charge in all cells will become equal.

Figure 4 is an example of a class of systems based on inductors and transformers. The highest charged cell 10 is connected to the inductor 40 by a switch 42. The current in the inductor will rise with time. After a predetermined amount of time the switch 42 is opened. As the current in the inductor cannot instantly change, it will find a way through the diode which is parallel to the other switch (of a lower voltage cell). The current will now charge the other battery cell, until the current has decayed to (nearly) zero and the diode stops conducting.

Figure 5 shows how the inductive cell-balancing sections must be combined to form long chains.

Two sections 12a,12b share one battery cell 50, the highest cell of one section 12b serves as the lowest cell of the next section 12a (by "next" section is meant the next section at a higher voltage). The other components are not shared between sections.

In general, the lowest cell of the section M is also the highest cell of section M-1. Applying this rule, arbitrarily long chains can be created. The system of Figure 5 needs N-1 inductors for a chain of N battery cells. So in a long chain (e.g. 100 cells) one needs roughly one inductor per battery cell.

The system of Figure 2 has the big advantage that it is very low cost, as it does not need any capacitors, inductors, or transformers. The systems of Figure 3 and Figure 4 need more or less one reactive component per section of the series-connected chain of battery cells and are therefore more costly. They do, however, have the advantage of a higher efficiency. The resistive method has a 0% efficiency as it burns off all excess power of all cells, except the lowest charged cells. The capacitive system burns 50% of the energy difference of the cells that it balances. The efficiency of an inductive system can be nearly 100%.

A particular problem with the inductive solution compared to resistive solutions is the cost of the components.

There is therefore a need for a cell balancing approach which finds a balance between circuitry cost and efficiency.

According to the invention, there is provided an energy storage cell arrangement comprising:
a series arrangement of cells, comprising at least two cells;
an inductor; and
a switching arrangement,
wherein the switching arrangement is controllable such that it is able to couple one side of the inductor to any one of a first set of cell terminals, and to couple the other side of the inductor to any one of a second set of cell terminals, wherein the first and second sets of cell terminals together comprise all cell terminals of the series arrangement.

This arrangement enables the inductor, used for energy transfer between cells, to be shared between cells.

In a first set of embodiments, the cell terminals of the first set are different to those of the second set. This provides the smallest number of connections to enable any cell terminal to be coupled to one or other terminal of the inductor.

In one arrangement, the switching arrangement can comprise a respective switch between each cell terminal and one of the inductor terminals, and a respective diode in parallel with each switch. This provides an arrangement with a switch and diode for each cell terminal, thus providing a small amount of additional circuitry.

In another arrangement, the switching arrangement comprises a respective switch between each cell terminal and one of the inductor terminals, a respective diode between each inductor terminal and the top cell terminal and a respective diode between each inductor terminal and the bottom cell terminal. This arrangement needs only four diodes.

In another arrangement, the switching arrangement comprises a first three-way switch at the input to one of the inductor terminals, a second three-way switch at the input to the other of the inductor terminals, and a respective switch between each cell terminal and both of the three-way switches, wherein the three way switches are controlled such that each respective switch is connected to one or other of the inductor terminals. In this case, the switching arrangement can comprise a first diode between the one inductor terminal and the top cell terminal and a second diode between the other inductor terminal and the bottom cell terminal.

This arrangement needs only two diodes, at the expense of having more switches in the circuit.

In a second set of embodiments, the cell terminals of the first set can include all cell terminals and the cell terminals of the second set can include all cell terminals. This provides most flexibility, in that all cell terminals can be connected to either inductor terminal.

In one arrangement, the switching arrangement comprises a respective switch between each cell terminal and one of the inductor terminals, a respective switch between each cell terminal and the other of the inductor terminals, and a respective diode between the one inductor terminal and the top cell terminal and a respective diode between the other inductor terminal and the bottom cell terminal. This arrangement requires only two diodes, but has two switches associated with each cell terminal.

In another arrangement, the switching arrangement comprises a respective diode between each inductor terminal and the top cell terminal and a respective diode between each inductor terminal and the bottom cell terminal.

The arrangement can further comprise a controller adapted to:
identify a cell or cells from which charge is to be removed;
control the switching arrangement to transfer energy from the identified cell or cells to the inductor; and
control the switching arrangement to transfer energy from the inductor to another cell or cells.

This control of the switching enables a desired transfer of energy between cells.

The invention also provides an electric vehicle battery cell pack comprising one or more battery cell arrangements of the invention.

The invention also provides a method of performing cell balancing within an energy storage cell arrangement which comprises a series arrangement of cells, comprising at least two cells and an inductor shared between all cells, the method comprising
identifying a cell or cells from which charge is to be removed;
controlling a switching arrangement to transfer energy from the identified cell or cells to the shared inductor; and
controlling the switching arrangement to transfer energy from the inductor to another cell or cells.

Examples of the invention will now be described in detail with reference to the accompanying drawings, in which:
Figure 1 shows a simplified block diagram of a battery pack to show the different components;
Figure 2 shows a known passive cell balancing system;
Figure 3 shows a known capacitive cell balancing system;
Figure 4 shows a known cell balancing system based on inductors and transformers;
Figure 5 shows how the inductive cell balancing sections of Figure 4 must be combined to form long chains;

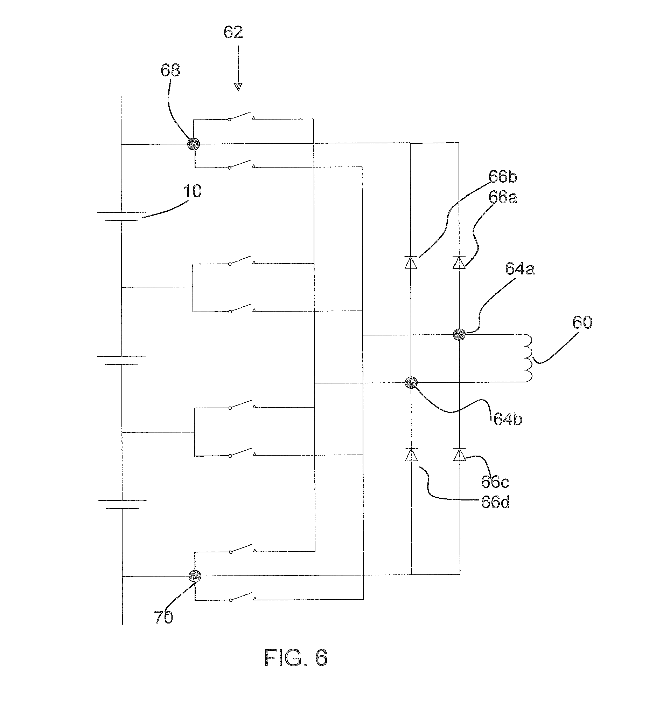

Figure 6 shows a first example of cell balancing circuit of the invention;

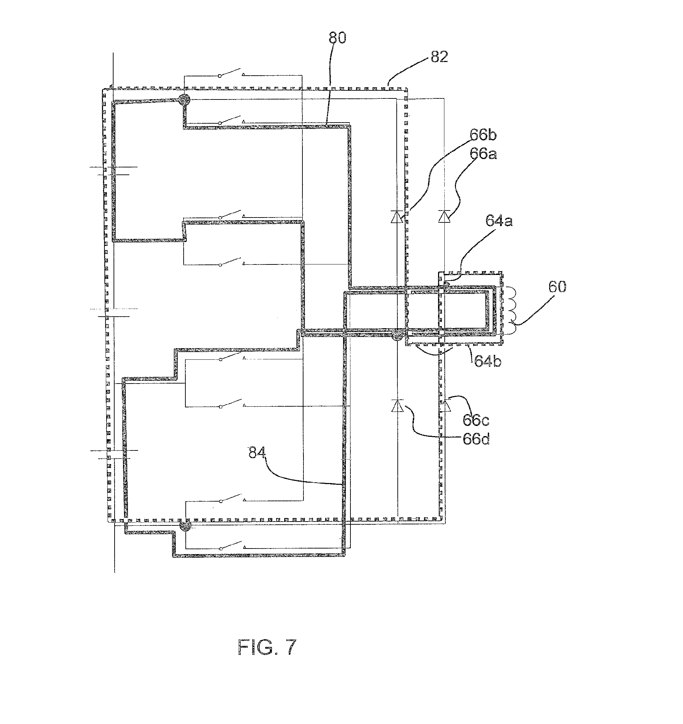

Figure 7 shows the current paths in the circuit of Figure 6;

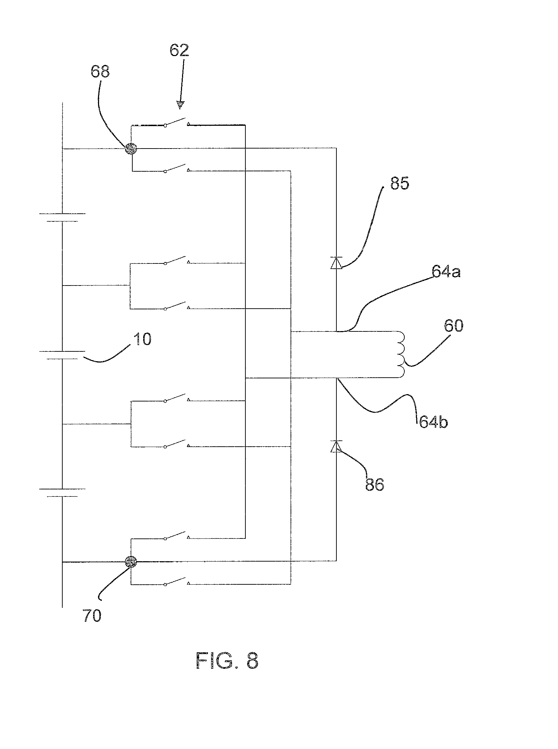

Figure 8 shows a second example of cell balancing circuit of the invention;

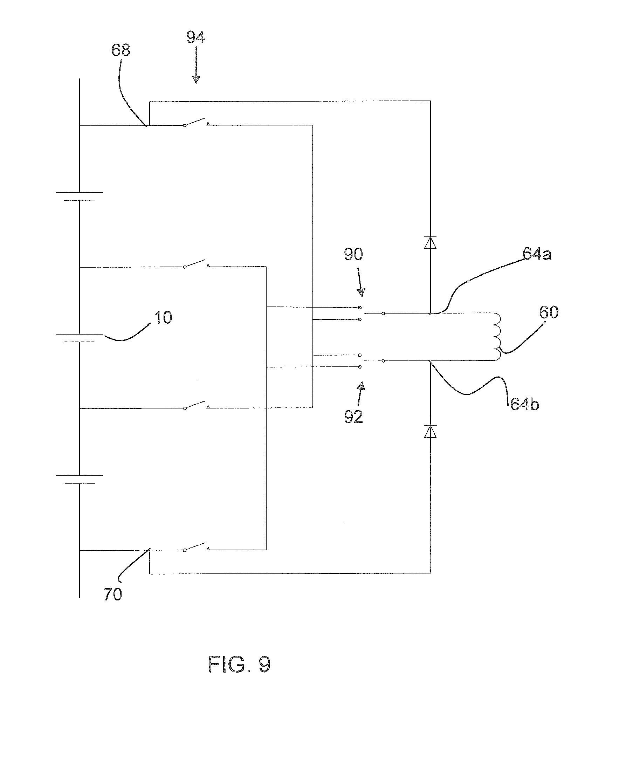

Figure 9 shows a third example of cell balancing circuit of the invention;

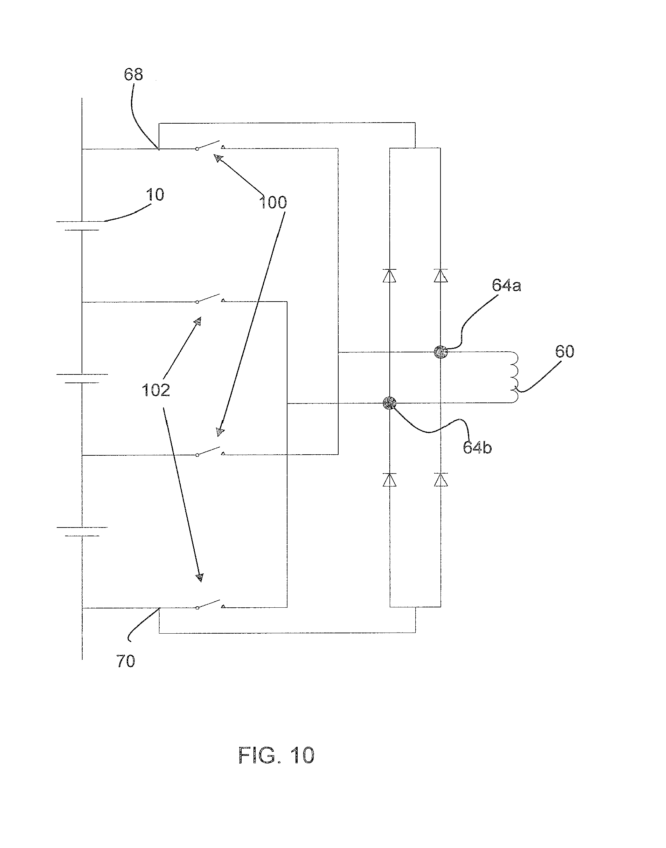

Figure 10 shows a fourth example of cell balancing circuit of the invention;

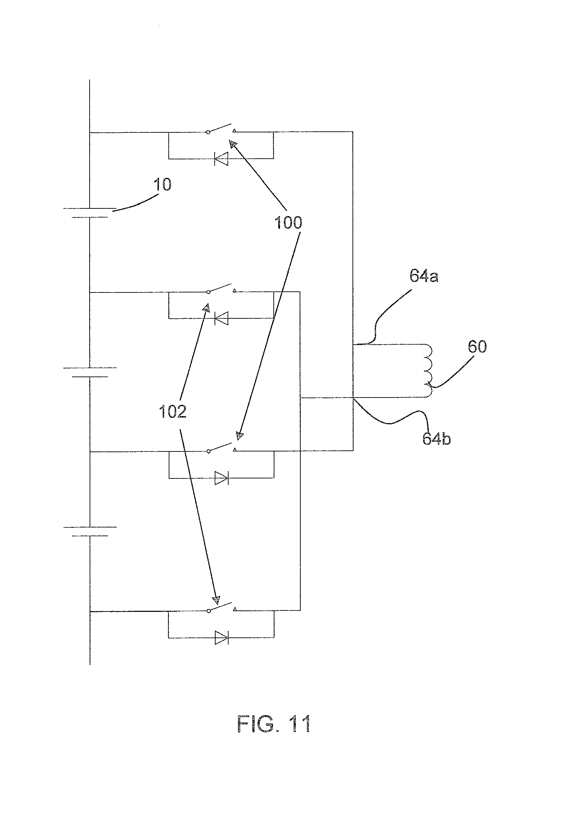

Figure 11 shows a fifth example of cell balancing circuit of the invention;

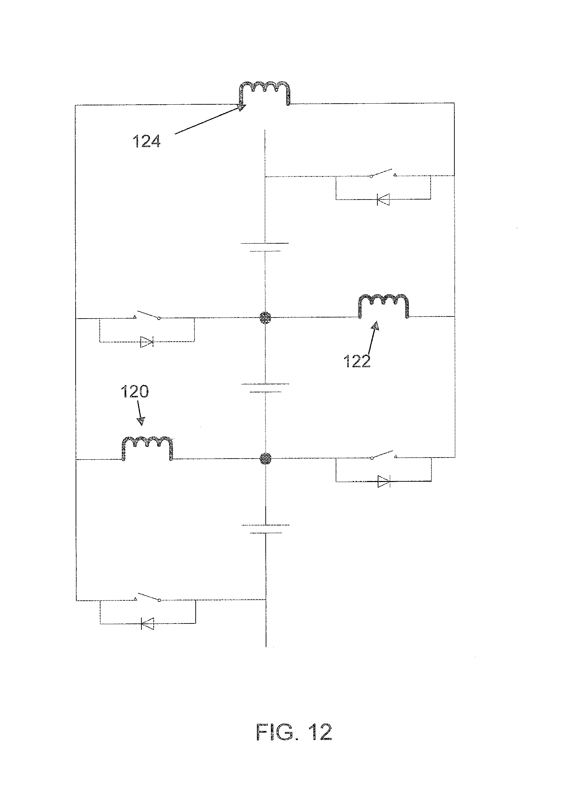

Figure 12 shows a comparison of the circuit of Figure 11 and Figure 4; and

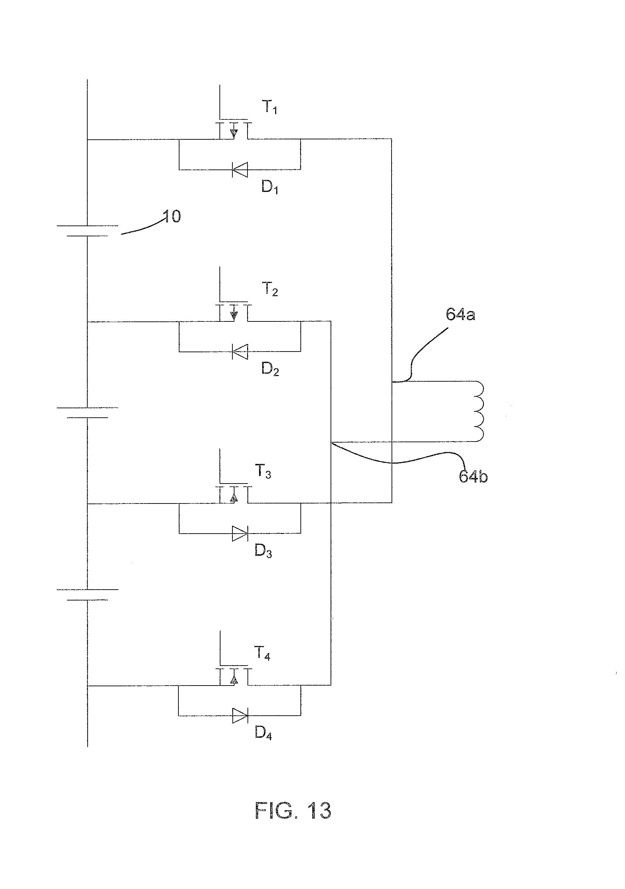

Figure 13 shows the circuit of the Figure 11 implemented with MOS transistors;

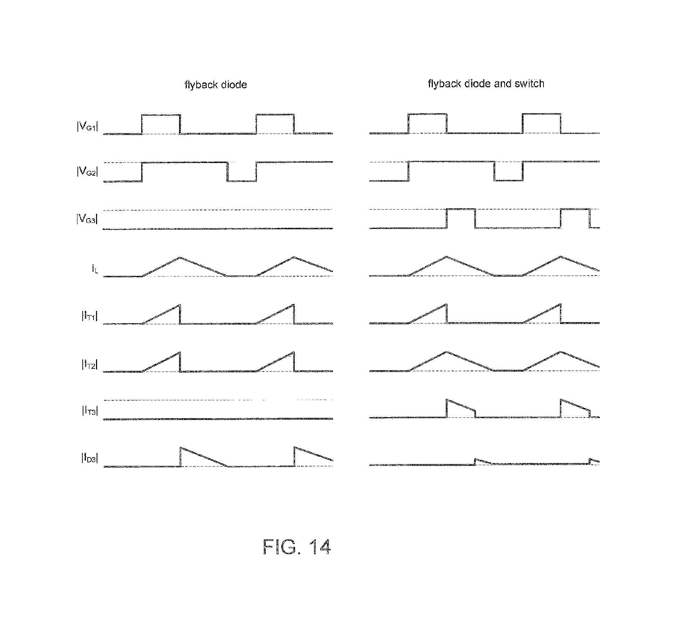

Figure 14 is a timing diagram to explain the operation of the circuit of Figure 12.

The same reference numbers have been used in different figures to denote the same components. The circuit diagrams in the figures present modifications compared to the previous circuits described, and for this reason, a description of the common components is not repeated.

The invention provides an energy storage cell arrangement in which a shared inductor is used. A switching arrangement is controllable such that it is able to couple one side of the inductor to any one of a first set of cell terminals, and to couple the other side of the inductor to any one of a second set of cell terminals, wherein the first and second sets of cell terminals together comprise all cell terminals of the series arrangement. In this way, energy can be transferred between cells in a configurable way, using a shared inductor.

Figure 6 shows an arrangement in which (theoretically) one inductor 60 can balance an arbitrarily long chain of cells. In practice relatively short sections of e.g. three or four cells and one inductor 60 will be combined to a longer chain. The use of short sections keeps the specification of the switches and diodes realistic.

In Figure 6, each cell terminal (because of the series connection of cells 10, there are four electrical cell terminals for the three cells shown) is connected through a respective switch 62 to one terminal 64a of the inductor, and through another respective switch 62 to the other terminal 64b of the inductor.

Thus, there are 2N switches, where N= no. of cells + 1.

A respective diode 66a is connected between the one inductor terminal 64a and the top cell terminal 68. A respective diode 66b is connected between the other inductor terminal 64b and the top cell terminal 68. A respective diode 66c is connected between the one inductor terminal 64a and the bottom cell terminal 70. A respective diode 66d is connected between the other inductor terminal 64b and the bottom cell terminal 70.

The diodes provide a current path to the series of cells so that inductor current is maintained flowing even if all the switches are open. The diode orientation is such that the cells cannot discharge through the diodes. Thus, the circuit made from the diodes and cells has the diodes and cells in a loop with the diodes reverse biased by the cell voltage.

The inductor in Figure 6 can be thought of as a "flying" inductor. It can take energy from an arbitrary (subgroup of) cell(s) and dump that energy in another arbitrary (subgroup of) cell(s). It is important to note that energy, not charge, must be pumped from one cell to another. If charge is pumped, the efficiency of the circuit will be equal to that of a capacitive cell-balancer (i.e. 50% of the initial energy difference of the cell is lost). To make sure energy is pumped, the inductor must be connected to the cell that is charged until the current has dropped to zero.

If the current is not allowed to drop to zero, the circuit will start to act like a combination of an energy pump and a charge pump. If the switching frequency is so high that a DC current flows through the coil, then the circuit operates as a pure charge pump.

Figure 7 shows the current paths in the circuit of Figure 6 when energy is pumped from the top cell to the bottom cell.

Path 80 shows the discharge of the highest charged cell, which in this case is the top cell. This builds flux in the inductor. For this purpose, one switch couples the top cell terminal to the inductor terminal 64a and another switch couples the second cell terminal down to the inductor terminal 64b.

When the switches in the path 80 are opened, the inductor will react by forcing current through the path 82. Path 82 shows the spill-over during switching from discharging to charging, and it drives current through the diodes.

Path 84 shows the path for inductor current to flow through the bottom cell. For this purpose, one switch couples the bottom cell terminal to the inductor terminal 64a and another switch couples the second cell terminal up to the inductor terminal 64b.

As soon as the switches in the path 84 are closed the inductor current will flow through the bottom cell.

Normally the time between opening the switches in path 80 and closing the switches in path 84 will be chosen as short as possible as the current path 82 pushes charge in all cells. As the target was to transfer energy from the top cell to the bottom cell, this can be regarded as a kind of spill-over. The energy in the red path 82 is not lost, as it transferred to all three cells, but it reduces the effective transfer of energy form the top cell to the bottom cell.

However, there is no reason why the spill-over path cannot be used on purpose - to transfer charge from the inductor to all cells. A designer can choose to take energy from one, two, or three cells and dump that energy in one, two, or three cells. The circuit offers all the flexibility needed to do this.

Figure 8 shows a modification which enables a saving of two diodes from the circuit of Figure 6.

In this case, there is only one diode 85 (or diode chain) between the one inductor terminal 64a and the top cell terminal 68 and one diode 86 (or diode chain) between the other inductor terminal 64b and the bottom cell terminal 70.

The current in the inductor has to return to zero before the next packet of energy can be moved from one cell to another. It is therefore possible to choose the direction of the current in the inductor each time a new energy transfer cycle is started. If the current in the inductor 60 always flows in the same direction, the same two diodes will always carry the spill-over current. In this way, the other two diodes can be eliminated from the circuit without any penalty.

The desired current flow can be assured by connecting the inductor with the correct polarity.

The circuit of Figure 8 needs 2*(N+1) switches, with N the number of cells.

Figure 9 shows a circuit with a reduction in the number of switches.

The switching arrangement comprises a first three-way switch 90 at the input to one of the inductor terminals 64a, a second three-way switch 92 at the input to the other of the inductor terminals 64b, and a respective switch 94 between each cell terminal and both of the three-way switches. The three way switches 90,92 are controlled such that each switch 94 is connected to or one other of the inductor terminals.

This means that only one switch 94 is needed between the cell terminal and the three way switches 90,92.

A first diode is between the one inductor terminal 64a and the top cell terminal 68 and a second diode is between the other inductor terminal 64b and the bottom cell terminal 70.

In the circuit of Figure 9, the selection of the cell and the direction of the current through the inductor are decoupled. In this circuit the number of switches equals N+5 (a toggle switch is actually two switches, so there are N+1 normal switches 94 and 4 toggle switches). For circuits with more than three cells, the circuit of Figure 9 needs fewer switches than the circuit of Figure 8.

The toggle switches 90,92 and the switches 94 are in series, and Figure 9 thus shows that (particularly for sections of more than three cells) switches can be saved by using series-connected switches for cell selection and coil-current direction.

As is clear from the description above, Figures 8 and 9 are derived from the circuit of Figure 6. The circuit of Figure 6 offers a lot of flexibility regarding the choice of cells to transfer energy between, and the direction of the currents. As Figures 8 and 9 show, giving up some flexibility results in a reduced number of components in the circuit.

Figure 10 takes this approach a step further. The direction of the inductor current cannot be freely chosen in this circuit. As a result, the number of switches can be halved with respect to Figure 6. As the direction of the inductor current can no longer be fixed, it is not possible to remove diodes.

In Figure 10, a first set of cell terminals (the first and third) are connected through respective switches 100 to the one inductor terminal 64a and a second set of cell terminals (the second and fourth) are connected through respective switches 102 to the other inductor terminal 64b.

A respective diode is between each inductor terminal and the top cell terminal and a respective diode is between each inductor terminal and the bottom cell terminal (i.e. the same diode arrangement as in Figure 6).

This has reduced flexibility- for example a pair of adjacent cells cannot be switched as a single unit. However, there is a reduction in number of switches.

In Figure 11, the diodes are moved such that they are parallel to the switches 100,102. In practical circuits, the switches will be NMOS and PMOS transistors. The diodes of Figure 11 can then simply be the (parasitic) drain-to-bulk diodes of the MOS transistors. This means that although they are important for the operation of the circuit, they don't show up as individual components in the layout. In this way, the circuit of Figure 11 will be smaller than the circuit of Figure 10.

The circuits of Figure 10 and Figure 11 behave nearly identically, but there is one important difference: the sections of Figure 10 can be arbitrarily long, whereas the sections of Figure 11 should preferably be limited to a length of three cells per section. If the sections of Figure 11 are made longer, the diodes can cause short circuits.

The inductor of Figure 6 can be regarded as a "flying" inductor as it can transfer energy form any cell to any other cell. The inductor of Figure 11 is more like a "rolling" inductor. It can only transfer energy from odd-numbered to even-numbered cells and vice versa.

The table below gives an overview of the number of components it takes to balance a battery pack with N cells, for various different embodiments above:

| | 2-cell sections | 3-cell sections | | | 4-cell sections | | |
|---|---|---|---|---|---|---|---|
| | fig. 4 | fig. 6 | fig. 8 | fig. 11 | fig. 6 | fig. 9 | fig. 10 |
| cells | N | N | N | N | N | N | N |
| inductors | N-1 | (N-1)/2 | (N-1)/2 | (N-1)/2 | (N-1)/3 | (N-1)/3 | (N-1)/3 |
| switches | 2*(N-1) | 4*(N-1) | 4*(N-1) | 2*(N-1) | 10*(N-1)/3 | 3*(N-1) | 5*(N-1)/3 |
| diodes | 2*(N-1) | 2*(N-1) | N-1 | 2*(N-1) | 4*(N-1)/3 | 2*(N-1)/3 | 4*(N-1)/3 |

The table shows that the circuit of Figure 11 is particularly interesting. It needs exactly the same number of switches and diodes, but only half the number of inductors to serve the same number of cells as the circuit of Figure 4. On top of that, if the circuit diagrams of complete battery packs made with sections of either Figure 4 or Figure 11 are compared, it shows that the circuit topology of both circuits is exactly identical for the cells, the switches, and the diodes. Only the inductors are connected differently.

Figure 12 shows the circuit of Figure 5, with the two inductors 120,122, and the same circuit but with inductor 124 instead of inductors 120 and 122 then corresponds to Figure 11.

In this way, it is very easy to bring down the cost of an existing cell balancer by removing all inductors from the circuit and re-inserting half of them in a different position.

A first disadvantage is that the worst case balancing time of Figure 11 is two times longer than that of Figure 4 (if the same component values are used). If only unbalance between two neighbouring cells has to be eliminated, the balancing time of the two circuits will be equal. But, if energy has to be moved between cells over a longer distance, the balancing time may take up to two times longer. The reason for this very simple: each inductor can move a certain amount of energy per clock cycle. So two inductors can move twice as much energy per clock cycle.

Secondly, the efficiency of Figure 11 is (slightly) lower as there are two switches in series with the inductor. Having two switches in series with the inductor does also have an advantage: if one of the switches breaks down, the other can be opened to prevent the excessive current in the inductor. In the circuit of Figure 4, only the very low parasitic resistance of the inductor and the broken switch will limit the current.

The table below shows the number of components in a battery pack with N cells built with M-cell sections, which together make up the N cells.

| | 2-cell sections | M-cell sections | | |
|---|---|---|---|---|
| | fig. 4 | fig. 8 | fig. 9 | fig. 10 |
| cells | N | N | N | N |
| inductors | N-1 | (N-1)/(M-1) | (N-1)/(M-1) | (N-1)/(M-1) |
| switches | 2*(N-1) | 2*(M+1)*(N-1)/(M-1) | (M+5)*(N-1)/(M-1) | (M+1)*(N-1)/(M-1) |
| diodes | 2*(N-1) | 2*(N-1)/(M-1) | 2*(N-1)/(M-1) | 4*(N-1)/(M-1) |

For example with 9 cells, there are four sets of 3 cells, with cells 3 and 5 7 overlapping between pairs of cell sections. Thus N=9, M=3 and 4 inductors are needed ((N-1)/(M-1)=4). The same overlap between cell sections explains the figures for switches and diodes.

Figure 13 shows a circuit in which the ideal switches of Figure 11 have been replaced by NMOS and PMOS transistors T1 to T4. As stated above, the diodes D1 to D4 connected across the transistors can be replaced by the transistor body diodes.

As mentioned above, it is important to pump energy, not charge, to achieve maximum efficiency. To this end the inductor current must have returned to zero before the start of each new pump cycle. The diodes help keep the current in the inductor at zero at the end of a pump cycle. However, due to the forward voltage of the diode it always dissipates some power while current is flowing through it. This energy is lost in the pumping process. To keep the efficiency of the energy pump as high as possible the voltage drop across the diode must be as low as possible. This can easily be achieved by using a Schottky diode. A disadvantage of a Schottky diode is that it is an extra component, i.e. a cost adder. A cheaper solution is to use the transistor body diodes of the switches. These, however, have a higher forward voltage than a Schottky diode.

Another approach to keeping the efficiency high is to turn on the switch of the diode that is conducting the flyback current. When the switch is on the diode will, in effect, not conduct any current as all current will flow through the switch. With a low-ohmic switch the losses will be very low.

A new problem is then that if the switch is not turned off when the current is zero, a reverse current will start flowing through the inductor. This will change the character of the pump to be something between an energy pump and a charge pump. This is bad for efficiency. This can be solved by measuring the voltage across the switch and switching it off when it is zero. A disadvantage of this approach is that it is costly as an extra comparator is needed.

A better approach is to use the fact that energy is always pumped from a higher-charged to a lower-charged cell. This is equivalent to pumping from a higher-voltage to a lower-voltage cell (assuming the cells have the same temperature). Per unit time the current change in the inductor is higher when connected to the highest-charged cell. If the switch across the flyback diode is kept closed exactly as long as the switch that connects the inductor to the highest-charged cell, the current in the inductor will still be (slightly) higher than zero by the time the switch is opened across the flyback diode. The flyback diode now only has to conduct the "tail" of the flyback current.

As the energy in the tail is very low, this does not have a major impact on the efficiency, even if the switch's transistor body diode is used instead of a Schottky diode. In a practical circuit the "flyback switches" will be closed slightly shorter than "pump switches". This to make sure that parasitic effects do not cause a reversal of the current in the inductor.

Figure 14 shows the functional gate voltages (i.e. high level means transistor acts as a closed switch, irrespective of whether the transistor is N or P-type) of the switches and the absolute value of the currents through the inductor, switches and diode D3. Figure 14 shows the signal waveforms of Figure 13 and the signals are shown for the case where energy is pumped from the top cell to the centre cell.

The left set of plots shows the case where the second phase is carried out without using flyback switching as explained above.

Initially, transistors T1 and T2 are turned on, and the inductor current rises, sourced from the top cell. T1 is then turned off. The inductor current then flows to the second cell through the diodes D2, D3. The second cell, the diodes D2 and D3 and the inductor from a closed circuit. Transistor T2 is shown turned on during this time but the current flow (in the reverse direction) is through the diode D2. All transistors are off before the next cycle begins.

The right set of plots shows the case where the second phase is carried out using flyback switching as explained above. In the second phase (energy transfer to the second cell), the transistor T3 is turned on for the initial part of the inductor current timing. This means that current flow is through the transistor T3 (in the forward direction) rather than through diode D3 while T3 is turned on. Only the small inductor current tail is driven through diode D3.

Circuits for the measurement of cell voltage for use in cell balancing are already known and in use, and these do not need any modification for use in the invention. They form part of a control circuit for the section, and such a control circuit (as can be used to implement the invention) is shown schematically in Figure 1 as 19, as part of the section 12b.

In all circuits discussed, a cell can be replaced by a group of cells. This means it is fairly easy to make a hierarchical cell-balancing system. In the lowest level sections composed of battery cells are balanced, in the highest level sections of battery modules are balanced. The circuit topologies are the same, but the specification of the components of the different levels are, of course, very different as the voltage of a module is roughly ten times the voltage of a cell.

The techniques described in this document can also be applied to super capacitors instead of battery cells.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage. Any reference signs in the claims should not be construed as limiting the scope.

## Claims

1. An energy storage cell arrangement comprising:
a series arrangement of cells (10), comprising at least two cells (10);
an inductor (60); and
a switching arrangement (62),
wherein the switching arrangement (62) is controllable such that it is able to couple one side of the inductor (60) to any one of a first set of cell terminals, and to couple the other side of the inductor (60) to any one of a second set of cell terminals, wherein the first and second sets of cell terminals together comprise all cell terminals of the series arrangement.

2. An arrangement as claimed in claim 1, wherein the cell terminals of the first set are all different to those of the second set.

3. An arrangement as claimed in claim 2, wherein the switching arrangement comprises a respective switch (100,102) between each cell terminal and one of the inductor terminals, and a respective diode in parallel with each switch.

4. An arrangement as claimed in claim 2, wherein the switching arrangement comprises a respective switch (100,102) between each cell terminal and one of the inductor terminals, a respective diode between each inductor terminal (64a,64b) and the top cell terminal (68) and a respective diode between each inductor terminal and the bottom cell terminal (70).

5. An arrangement as claimed in claim 2, wherein the switching arrangement comprises a first three-way switch (90) at the input to one of the inductor terminals (64a), a second three-way switch (92) at the input to the other of the inductor terminals (64b), and a respective switch (94) between each cell terminal and both of the three-way switches, wherein the three way switches are controlled such that each respective switch is connected to one or other of the inductor terminals.

6. An arrangement as claimed in claim 5, wherein the switching arrangement (94) comprises a first diode between the one inductor terminal (64a) and the top cell terminal (68) and a second diode between the other inductor terminal (64b) and the bottom cell terminal (70).

7. An arrangement as claimed in claim 1, wherein the cell terminals of the first set include all cell terminals and the cell terminals of the second set include all cell terminals.

8. An arrangement as claimed in claim 7, wherein the switching arrangement (62) comprises a respective switch between each cell terminal and one of the inductor terminals (64a), and a respective switch between each cell terminal and the other of the inductor terminals (64b), and a respective diode (85) between the one inductor terminal (64a) and the top cell terminal (68) and a respective diode (86) between the other inductor terminal (64b) and the bottom cell terminal.

9. An arrangement as claimed in claim 8, wherein the switching arrangement (62) comprises a respective diode (66a,66b) between each inductor terminal (64a,64b) and the top cell terminal (68) and a respective diode (66b,66c) between each inductor terminal (64a,64b) and the bottom cell terminal.

10. An arrangement as claimed in any preceding claim, further comprising a controller (19) adapted to:
identify a cell or cells (10) from which charge is to be removed;
control the switching arrangement (62) to transfer energy from the identified cell or cells to the inductor (60); and
control the switching arrangement (62) to transfer energy from the inductor to another cell or cells.

11. An electric vehicle battery cell pack (18) comprising one or more battery cell arrangements as claimed in any preceding claim.

12. A method of performing cell balancing within an energy storage cell arrangement which comprises a series arrangement of cells (10), comprising at least two cells and an inductor (60) shared between all cells, the method comprising
identifying a cell or cells (10) from which charge is to be removed; controlling a switching arrangement (62) to transfer energy from the identified cell or cells to the shared inductor; and
controlling the switching arrangement (62) to transfer energy from the inductor to another cell or cells.

13. The method of claim 12, wherein controlling the switching arrangement (62) comprises coupling one side of the inductor (60) to a selected one of a first set of cell terminals, and coupling the other side of the inductor to a selected one of a second set of cell terminals.

14. The method of claim 12, wherein controlling the switching arrangement (62) to transfer energy from the identified cell or cells to the shared inductor comprises passing a current through the switches and the inductor, and controlling the switching arrangement (62) to transfer energy from the inductor to another cell or cells comprises passing current through a diode arrangement.
